# EUROPEAN PATENT APPLICATION

(11) **EP 4 618 011 A1**
(43) Date of publication of application: **17.09.2025**
(21) Application number: 25162018.3
(22) Date of filing: 06.03.2025
(51) Int. Cl.: G06T 7/00

(54) **OUTPUT APPARATUS, OUTPUT SYSTEM, AND OUTPUT METHOD**

(30) Priority: 14.03.2024 JP 2024039865
(71) Applicant: Ricoh Company, Ltd., Tokyo 143-8555 (JP)
(72) Inventor: OHMURA, Keiji, Tokyo, 143-8555 (JP)
(74) Representative: SSM Sandmair

(57) **Abstract**

An output apparatus (1) includes a control unit (17) to acquire a defect on an object from an inspection device, determine a center point (C) of the defect on the object (2), and output image data to the center point of the defect on the object or to a portion adjacent to the center point (C) of the defect on the object.

## Description

### BACKGROUND

### Technical Field

The present disclosure relates to an output apparatus, an output system, and an output method.

### Related Art

An automobile manufacturing line that can recognize whether measures have been taken for a detected paint defect is used.

Japanese Unexamined Patent Application Publication No. 2023-13522 proposes a system that detects and displays a paint defect of an object together with the position of a defect. When measures have been taken for the paint defect, the system stops displaying the paint defect on an image indicating the surface of the object or changes the display mode of the paint defect.

However, the system proposed in Japanese Unexamined Patent Application Publication No. 2023-13522 has a problem that the position of the defect is not clear in an actual object.

### SUMMARY

In order to solve the above problem, an object of the present disclosure is to provide an output apparatus that can clearly display the position of a defect.

According to an embodiment of the present disclosure, an output apparatus includes a control unit to acquire a defect on an object from an inspection device, determine a center point of the defect on the object, and output image data to the center point of the defect on the object or to a portion adjacent to the center point of the defect on the object.

According to an embodiment of the present disclosure, an output apparatus system includes an inspection device to inspect a defect on an object and an output apparatus including a control unit. The control unit determines a center point of the defect on the object and outputs image data to the center point of the defect on the object or to a portion adjacent to the center point of the defect on the object.

According to an embodiment of the present disclosure, an output method includes determining a center point of a defect on an object and outputting image data at a position of the defect based on the center point of the defect.

According to the present disclosure, an output apparatus that can clearly display the position of a defect can be provided.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating a configuration of an output system according to a first embodiment;
FIGS. 2A to 2C are diagrams illustrating a method for determining a center point of a defect by an output apparatus according to the first embodiment;
FIGS. 3A to 3C are diagrams illustrating a mode that emphasizes image data in an output apparatus according to the first embodiment;
FIGS. 4A to 4C are diagrams illustrating an example of changing an image data display method in an output apparatus according to the first embodiment;
FIG. 5 is a diagram illustrating an example of a modification of image data in an output apparatus according to the first embodiment;
FIGS. 6A to 6C are diagrams illustrating timings of displaying image data in an output apparatus according to the first embodiment;
FIG. 7 is a diagram illustrating a display of a visual inspection region, performed by an output system according to the first embodiment;
FIG. 8 is a block diagram illustrating a hardware configuration of an output apparatus according to the first embodiment;
FIG. 9 is a flowchart of an output method according to the first embodiment;
FIG. 10 is a flowchart of a process of changing an output method of image data in an output system according to the first embodiment; and
FIG. 11 is a diagram illustrating a configuration of an output system according to a second embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

According to the present disclosure, an output apparatus that can clearly display the position of a defect can be provided.

Embodiments of the present disclosure will be described below with reference to the drawings. In the drawings, the same or like reference signs denote like elements having substantially the same or corresponding configurations, and descriptions thereof may be omitted.

### First Embodiment

### Configuration of Output Apparatus

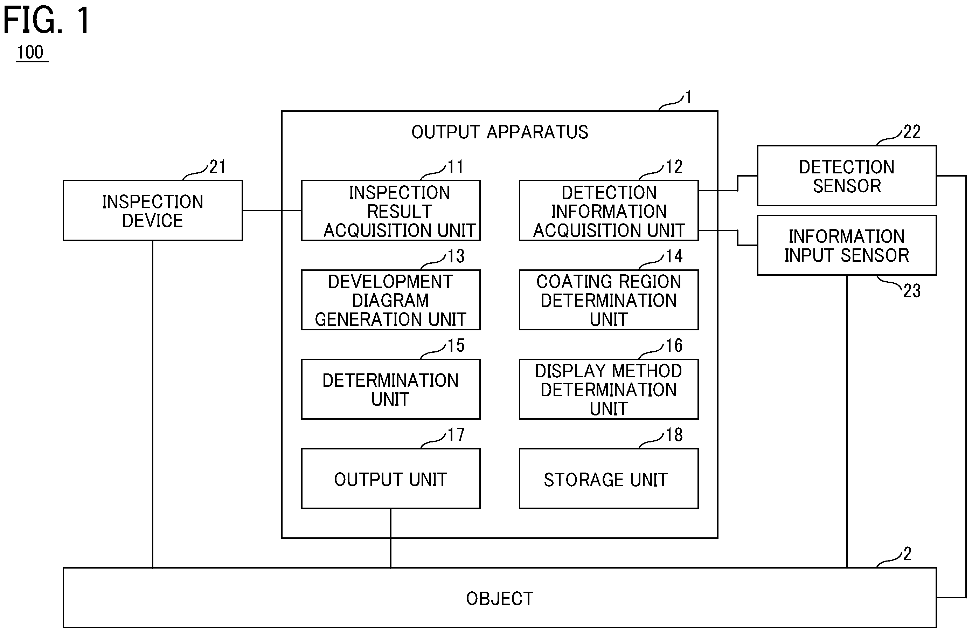

FIG. 1 is a diagram illustrating a configuration of an output system 100 according to a first embodiment of the present disclosure. The output system 100 includes an output apparatus 1, an object 2, an inspection device 21, a detection sensor 22, and an information input sensor 23.

The object 2 is, for example, a vehicle. The vehicle may be, for example, a painted automobile including a large automobile, an ordinary automobile, or a small automobile. In the following description, an example of an automobile will be described, but the object 2 may be changed as appropriate.

The inspection device 21 inspects a defect on the object 2. More specifically, the inspection device 21 inspects a defect on the surfaces of the door, the hood, the roof, the trunk lid, and the rear bumper that the automobile body includes. The defect is, for example, a coating defect, a scratch, a crack, an irregularity, a dirt, or a discoloration defect formed on the surface of the automobile body. The inspection device 21 may inspect the defect while the object 2 is being conveyed. The inspection device 21 may be a portable input device.

The detection sensor 22 detects a timing at which the leading edge of the conveyed object 2 is detected. A timing at which the output unit 17 outputs image data may be determined based on a timing at which the detection sensor 22 detects the object 2 and the speed at which the object 2 is conveyed.

The timing at which the detection sensor 22 detects the object 2 is transmitted to a display method determination unit 16 via a detection information acquisition unit 12. For example, the detection method may be, but not limited to, a method that uses an infrared sensor and image processing.

The information input sensor 23 transmits data that identifies the object 2, such as identification information including the identification (ID) of the object 2, to a determination unit 15 via the detection information acquisition unit 12.

Based on the inspection result of a defect on the object 2 from the inspection device 21, the output apparatus 1 displays predetermined information at the position of the defect of the object 2. The output apparatus 1 includes an inspection result acquisition unit 11, the detection information acquisition unit 12, a development diagram generation unit 13, a coating region determination unit 14, the determination unit 15, the display method determination unit 16, an output unit 17, and a storage unit 18. The inspection result acquisition unit 11 can communicate with the inspection device 21. The detection information acquisition unit 12 can communicate with the detection sensor 22 and the information input sensor 23.

The inspection result acquisition unit 11 acquires an inspection result of a defect on the object 2 from the inspection device 21. The information on the inspection of defect may include identification information on the object 2, a position of the defect, and a type of the defect. The inspection result acquisition unit 11 can also acquire three-dimensional data that represents the three-dimensional shape of the object 2 and information such as a takt time. The three-dimensional data of the object 2 is used as data for projecting the defect on the object 2. The inspection result acquisition unit 11 may store the acquired information on the inspection of defect and the three-dimensional data of the object 2 in the storage unit 18. The inspection result acquisition unit 11 also acquires the moving amount of the object 2.

The takt time may be a time during which the transported object 2 passes one process. The time taken to pass one process may be, for example, a time from the detection of the leading edge of the object 2 by the detection sensor 22 to the detection of the leading edge of the following object 2.

The detection information acquisition unit 12 acquires identification information on the conveyed object 2 and detection information on detecting the object 2. The identification information on the conveyed object 2 may be acquired from the information input sensor 23. The detection information on the object 2 may be acquired from the detection sensor 22. The detection information acquisition unit 12 transmits the identification information and the detection information on the object 2 to the display method determination unit 16.

The development diagram generation unit 13 creates a development diagram of the object 2 based on the three-dimensional data of the object 2. The development diagram generation unit 13 can also acquire two-dimensional data of the object 2. In this case, the development diagram generation unit 13 may generate a development diagram of the object 2 based on the acquired two-dimensional data.

The coating region determination unit 14 determines a coating region coated on the object 2 based on the three-dimensional data of the object 2 and the development diagram of the object 2. The coating region determination unit 14 determines the end portion of each region included in the development diagram of the object 2. The end portion may be, for example, a region on a line surrounding a surface to be coated when the object 2 is an automobile body. The end portion is excluded from the surface not coated, and, for example, the glass or the tire is excluded.

The determination unit 15 determines the center point of the defect based on the defect on the object 2. The center point of the defect may be determined based on the inspection result acquired by the inspection result acquisition unit 11. The determination unit 15 may determine the center point of the defect by calculating the center coordinates of the defect on the object 2 based on the identification information on the object 2 received from the information input sensor 23 and the information on the inspection of defect.

The display method determination unit 16 determines a mode that emphasizes the defect based on the center point of the defect. Specifically, the display method determination unit 16 determines a display method with a mode that emphasizes image data indicating the center point of the defect. Further, the display method determination unit 16 can determine a repair option of the defect and change the image data display method based on the repair option of the defect.

The display method determination unit 16 can also change the image data display method based on the takt time required for repairing the defect. More specifically, the display method determination unit 16 recalculates the timing of repairing the defect based on the takt time and the number of defects on the object 2 when the time required for repairing the defect exceeds the takt time.

For example, it is assumed that the takt time is 60 seconds and the number of defects on the object 2 is eight and the time required for repairing one defect is 10 seconds. At this time, the time required for repairing the defects is 80 seconds, which exceeds the takt time.

At this time, for example, when the number of defects on a following object 2 is three, the takt time for the two objects 2 is 120 seconds. Since the defects on the two objects 2 are 11, the time required for repairing the defects on the two objects 2 is 110 seconds, which is smaller than the takt time. The display method determination unit 16 may recalculate the timing so as to change the display of the image data every 10 seconds so that the defects on the two objects 2 can be repaired.

The display method determination unit 16 can also output a calculation result that, for example, other operators also participate in the defect repairing operation in the case where the defects on three objects 2 are repaired and the repairing time exceeds the takt time.

For example, it is assumed that a first object 2 has eight defects, a second object 2 has seven defects, and a third object 2 has six defects. It is also assumed that the takt time is 60 seconds and the time required for repairing one defect is 10 seconds.

At this time, the defects on the third object 2 are repaired within the takt time. However, two defects on the first object 2 cannot be repaired within the takt time of the first object 2, and one defect on the second object 2 cannot be repaired within the takt time of the second object 2.

The defects on the first and second objects 2 that cannot be repaired cannot be repaired within the takt time of the third object 2. In such a case, the display method determination unit 16 can give the operator warning.

The output unit 17 outputs image data to the position of the defect on the object 2. The image data is displayed in a mode that emphasizes the image data that indicates the center point of the defect. The output unit 17 outputs image data to the position of the defect based on the moving amount of the object 2 acquired by the inspection result acquisition unit 11.

The image data may include information such as image data and information indicating which operator performs defect repair. The image data is preferably in a form that emphasizes the center position of the defect. The image data may be, for example, a tick image for emphasis, and may be in a form in which an acute angle portion of the tick image is the center position of the defect.

The information indicating which operator performs defect repair may include information on the name of the operator that performs defect repair and the defect repairing order. The information on the operator may be, but not limited to, the name of the operator, or an identification display, and may be any information that can identify the operator.

The output unit 17 may also output the image data on the object 2 by a predetermined method such as projection or projection mapping. When the projection mapping is used, the operator can accurately perform the defect repair in a short time.

The storage unit 18 may store information on the inspection of defect acquired by the inspection result acquisition unit 11 and the three-dimensional data of the object 2. The storage unit 18 may include a random-access memory (RAM), a read-only memory (ROM), and a hard disk drive (HDD) as a storage device.

### Determination of Center Point of defect

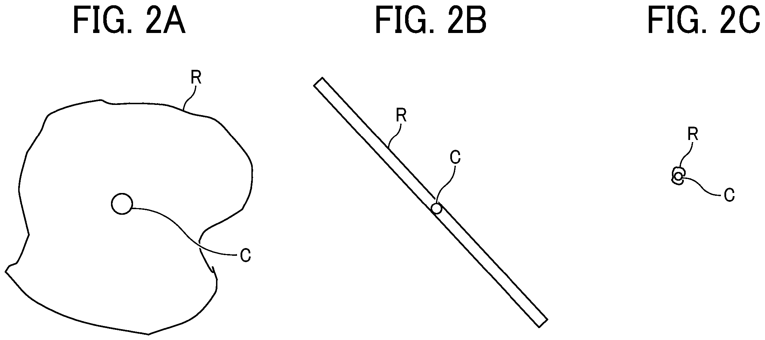

A determination method for determining a center point of the defect in a development diagram of the object 2 by the determination unit 15 will be described with reference to FIGS. 2A to 2C. FIGS. 2A to 2C are diagrams illustrating a method for determining a center point of the defect by the output apparatus according to the first embodiment of the present disclosure. In FIGS. 2A, 2B and 2C, the center point C of the defect is indicated with respect to the region R of the defect. The shape of the region R of the defect can be represented by various shapes such as a polygon, a rectangle, or a circle.

When the information on the inspection of a defect on the object 2 is two-dimensional coordinates (x, y), the density in the region R may be set to a uniform constant. When the information on the inspection of a defect on the object 2 is three-dimensional coordinates (x, y, z), the density at a certain point in the region R may be set as the value of z. In this case, z is information on the irregularity in the region R.

### Display of Image Data

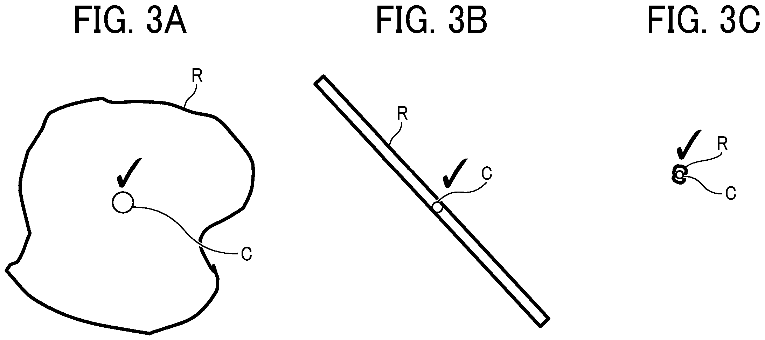

FIGS. 3A to 3C are diagrams illustrating a mode that emphasizes image data in the output apparatus 1 according to the first embodiment of the present disclosure. The regions R of the defect illustrated in FIGS. 3A, 3B, and 3C correspond to those illustrated in FIGS. 2A, 2B, and 2C, respectively. As illustrated in FIGS. 3A to 3C, the output unit 17 may output, for example, a tick image for emphasis as image data of a mode that emphasizes the defect near the center point C of the region R of the defect.

When a repair option of the defect requires a treatment such as scraping, the display method determination unit 16 may determine a range to be treated. At this time, the output unit 17 may irradiate the range to be repaired with a thick line. The output of the image data by the output unit 17 may be performed by a method of blinking and lighting, but not limited to, and may be performed by various methods.

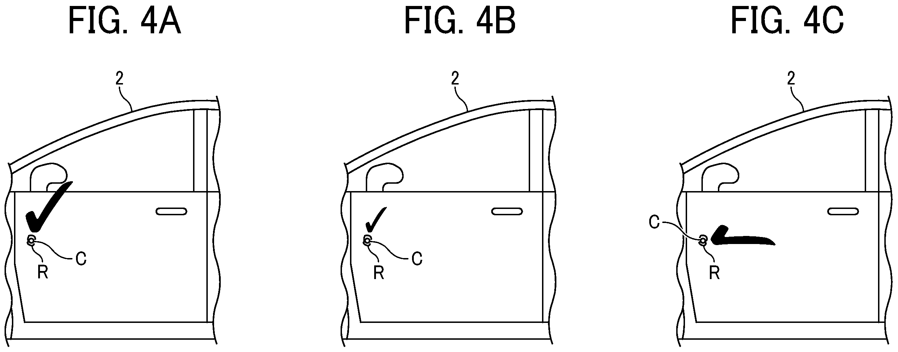

FIGS. 4A to 4C are diagrams illustrating an example of changing the display of image data in the output apparatus 1 according to the first embodiment of the present disclosure. FIGS. 4A to 4C are diagrams illustrating a case where the position of an object defect is located at an end portion of a region in a development diagram of the object 2.

FIG. 4A is a diagram illustrating a case where image data is displayed in a normal size. FIG. 4B is a diagram illustrating a case where the image data is displayed in a smaller size than the image data in FIG. 4A. FIG. 4C is a diagram illustrating a case where the image data is displayed in a rotated position with respect to FIG. 4A. For example, when the position (region) R of the defect is at an end portion of a door of an automobile, the position of the defect cannot be clearly displayed because the defect straddles over multiple regions depending on the size of the image data.

When the position R of the defect is at the end portion of the region in the development diagram of the object 2, the image data may be less viewable due to overlapping with the end portion or straddling over other regions. In FIG. 4A, since the position R of the defect is near the end portion of the door, the center point C is also near the end portion of the door, and the image data straddles over the door and the front door glass. Then, as illustrated in FIG. 4B, the display method determination unit 16 reduces the image data to be smaller than the image data illustrated in FIG. 4A, and the output unit 17 outputs the image data near the center point C. Further, as illustrated in FIG. 4C, the display method determination unit 16 rotates the image data by about 45 degrees as a predetermined angle with respect to the image data of FIG. 4A to display the image data. Accordingly, the position of the defect can be clearly displayed.

### Display of Image Data and Operator for Repair

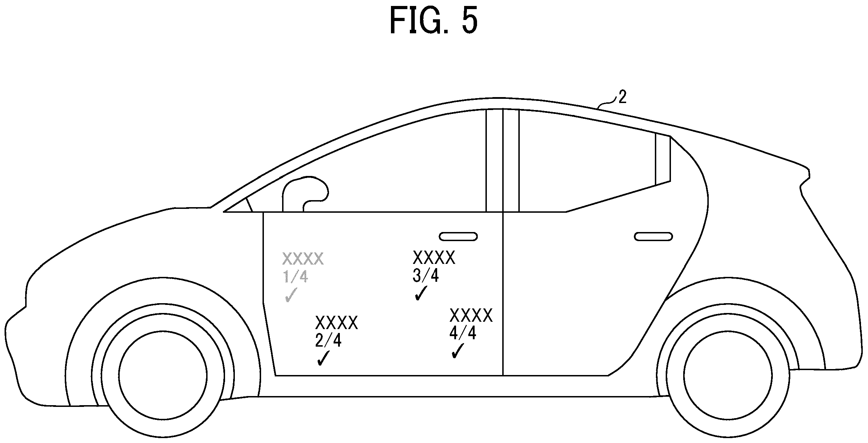

FIG. 5 is a diagram illustrating an example of a modification of image data in the output apparatus 1 according to the first embodiment of the present disclosure. FIG. 5 is a diagram illustrating an example of an object 2 having four defects. In FIG. 5, the image data of "XXXX1/4", "XXXX2/4", "XXXX3/4", and "XXXX4/4" are displayed as an example.

The image data includes the name of the operator that repairs the defect and the repair order in which the defect is repaired. In FIG. 5, the repair order is displayed as from 1/4 to 4/4 so as to repair the defect in this order. In FIG. 5, "XXXX" is displayed as the name of the operator or the identification display.

The display method determination unit 16 may change the display of each defect position depending on the number of defects and the takt time. For example, it is assumed that there are four defect positions and the takt time is 60 seconds. At this time, the display method determination unit 16 may change the display of each defect position every 15 seconds as the timing of repairing the defect.

For example, when the defect at the position "XXXX1/4" in FIG. 5 is repaired, the color of the image data to be displayed can be lightened and the name of the operator can be removed. The image data at a position to be repaired can be displayed in an emphasized mode by changing the color of the image data or blinking the image data.

### Timing of Display

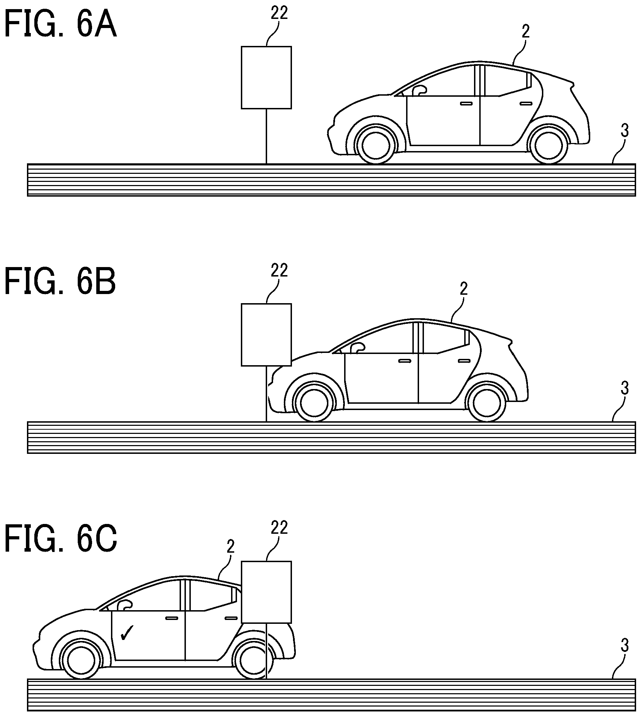

FIGS. 6A to 6C are diagrams illustrating a timing of displaying image data by the output apparatus 1 according to the first embodiment of the present disclosure. In FIGS. 6A to 6C, the object 2, the detection sensor 22, and the conveyor 3 are illustrated. The conveyor 3 conveys the object 2. Since the conveyor 3 conveys the object 2, the position of the object 2 with respect to the detection sensor 22 changes and, at the same time, the mode that displays the image data is changed. FIG. 6A is a diagram illustrating the object 2 before the object 2 is conveyed in front of the detection sensor 22. FIG. 6B is a diagram illustrating the object 2 just before the object 2 is conveyed in front of the detection sensor 22. FIG. 6C is a diagram illustrating the object 2 just after the object 2 is conveyed in front of the detection sensor 22.

In FIG. 6A, the object 2 is conveyed at a constant speed by the conveyor 3. In FIG. 6B, the detection sensor 22 detects the leading edge of the object 2 conveyed by the conveyor 3. At this time, the display method determination unit 16 determines the center point C of the defect in the development diagram of the object 2 based on the inspection result acquired by the inspection device 21. The detection sensor 22 acquires the moving amount of the object 2. The moving amount may be acquired by, for example, an encoder.

In the case of FIG. 6C, the output unit 17 displays the image data indicating the center point C of the defect in a mode that emphasizes the image data. The output unit 17 outputs image data to the center point C of the defect based on the moving amount of the object 2.

### Display a Visual Inspection Region

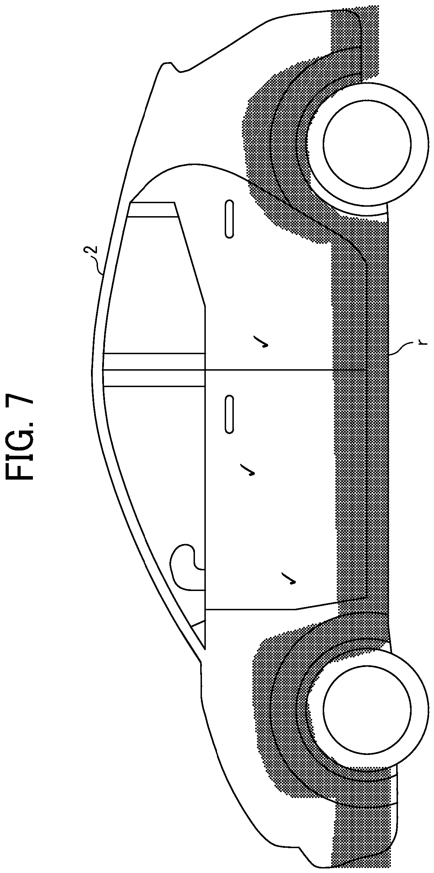

FIG. 7 is a diagram illustrating a display of a visual inspection region, performed by an output system 100 according to the first embodiment of the present disclosure. In FIG. 7, the image data and a visual inspection region r are displayed on the object 2. The visual inspection region r is a region in which the defects on the object 2 have not been inspected.

The display method determination unit 16 determines the visual inspection region r. The visual inspection region r is a region near an end portion of an automobile body of the object 2, and the region has a large curved surface.

There is a case where the inspection device 21 cannot inspect all regions of the object 2. In such a case, the display method determination unit 16 may acquire, from the inspection device 21, information on the region that cannot be inspected by the inspection device 21, and display the information as a visual inspection region r. The output apparatus 1 can clearly display the position of the defect by displaying the image data and the visual inspection region r on the object 2.

### Hardware Configuration

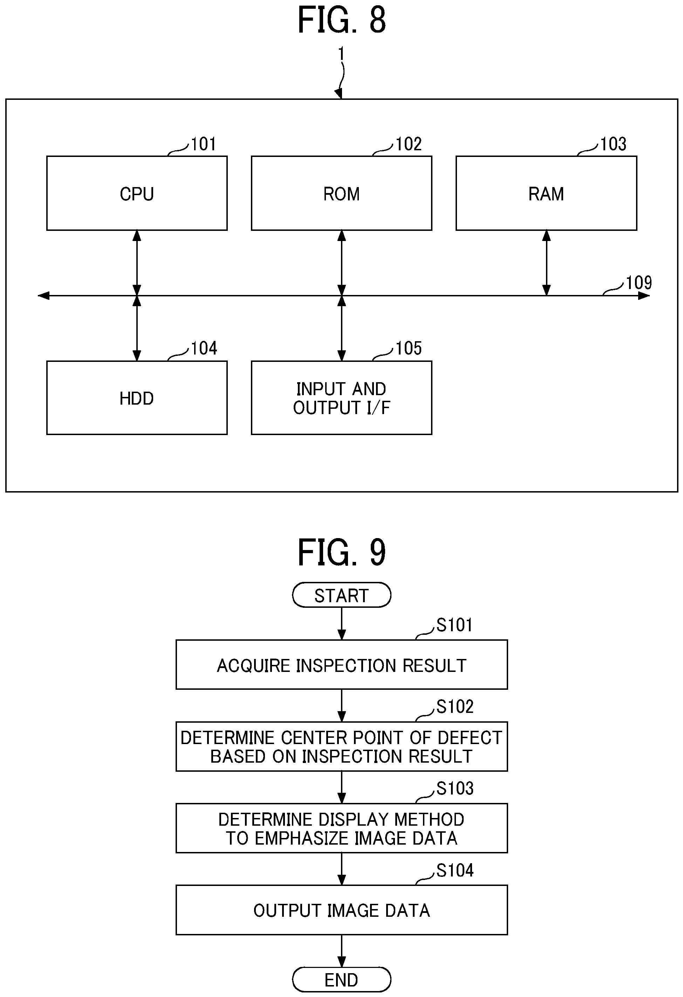

FIG. 8 is a block diagram illustrating a hardware configuration of the output apparatus 1 according to the first embodiment of the present disclosure. The output apparatus 1 includes a central processing unit (CPU) 101, a read-only memory (ROM) 102, a random-access memory (RAM) 103, a hard disk drive (HDD) 104, and an input and output interface (I/F) 105. These components are electrically connected to each other via a bus 109.

The CPU 101 controls the operation of the output apparatus 1. The ROM 102 stores programs to be executed in the CPU 101. The RAM 103 is used as a work area of the CPU 101. The HDD104 stores various data such as programs. The input-and-output I/F 105 is an interface that inputs and outputs various signals and data to and from an external device.

Some or all of the functions of the CPU 101 may be implemented by an electronic circuit such as an application specific integrated circuit (ASIC) or a field-programmable gate array (FPGA).

### Output Method

FIG. 9 is a flowchart of an output method according to the first embodiment of the present disclosure. The output method is performed by the output apparatus 1 that displays the image data at the position of the defect on the object 2.

The inspection result acquisition unit 11 acquires an inspection result of a defect on the object 2 from the inspection device 21 (step S101). The determination unit 15 determines the center point C of the defect based on the inspection result acquired by the inspection result acquisition unit 11 (step S102).

The display method determination unit 16 determines a display method with a mode that emphasizes the image data indicating the center point C of the defect determined by the determination unit 15 (step S103). The output unit 17 outputs the image data according to the display method determined by the display method determination unit 16 to the position of the defect on the object 2 (step S104).

Following these steps, the display method according to an embodiment of the present disclosure is implemented. However, the display method according to an embodiment of the present disclosure may include other steps as appropriate depending on the measurement conditions or the measurement environment.

### Changing Process of Output Method for Image Data

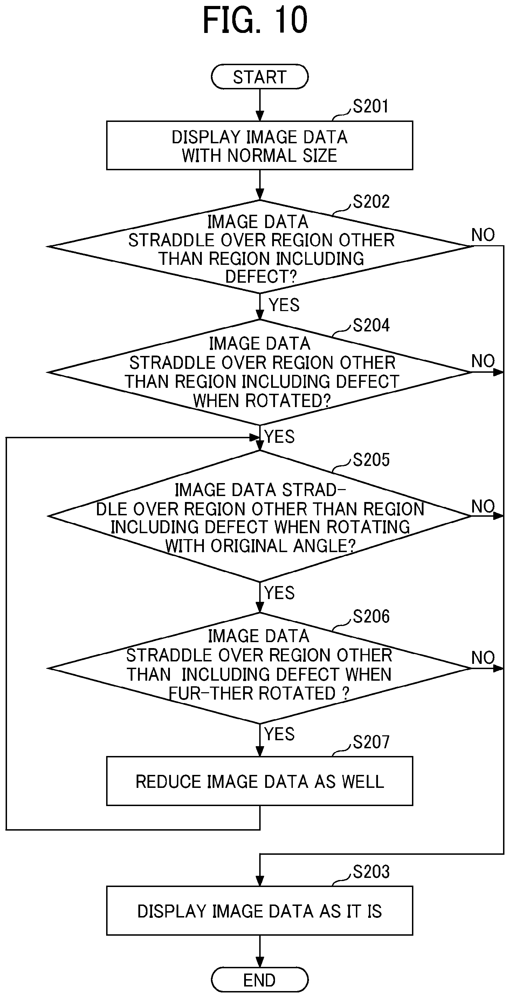

FIG. 10 is a flowchart of a process of changing an output method of image data in the output system 100 according to the first embodiment of the present disclosure. The display method determination unit 16 calculates the image data so as to display the image data at the center point C of the defect in a normal size (step S201).

The display method determination unit 16 determines whether the image data straddles over a region other than the region including the defect (step S202). When the image data does not straddle over a region other than the region including the defect (No in step S202), the image data is output to the output unit 17 as it is (step S203). When the image data straddles over a region other than the region including the defect (Yes in step S202), the display method determination unit 16 determines whether the image data straddles over a region other than the region including the defect when the image data is rotated (step S204).

When the image data is rotated so as not to straddle over a region other than the region including the defect (No in step S204), the display method determination unit 16 outputs the image data to the output unit 17 as it is (step S203). When the image data straddles over the region other than the region including the defect regardless of how the image data is rotated (Yes in step S204), the display method determination unit 16 reduces the image data in a state where the image data is not rotated (step S205).

When the image data is reduced at a predetermined reduction ratio and does not straddle over a region other than the region including the defect (No in step S205), the display method determination unit 16 outputs the image data to the output unit 17 as it is (step S203). When the image data is reduced at the predetermined reduction ratio but still straddles over the region other than the region including the defect (Yes in step S205), the display method determination unit 16 further rotates the image data (step S206).

When the image data is reduced at the predetermined reduction ratio and rotated, and does not straddle over a region other than the region including the defect (No in step S206), the display method determination unit 16 outputs the image data to the output unit 17 as it is (step S203). When the image data is reduces at the predetermined reduction ratio and rotated but still straddles over a region other than the region including the defect (Yes in step S206), the display method determination unit 16 further reduces the image data (step S207). The display method determination unit 16 repeats the processes from step S105 to step S107.

### Effect

In the output apparatus 1 according to an embodiment of the present disclosure, the output unit 17 outputs the image data according to the display method determined by the display method determination unit 16 to the position of the defect on the object 2. The image data is displayed in a mode that emphasizes the image data that indicates the center point C of the defect. Thus, the position of the defect can be clearly displayed on the object 2, and the position of the defect can be easily recognized by an operator that repairs the defect, and the efficiency of the repair operation can be increased.

Further, since the method for outputting the image data displayed at the position of the defect on the object 2 is changed based on the takt time required for repairing the defect, the following work position can easily be recognized by the operator.

### Second Embodiment

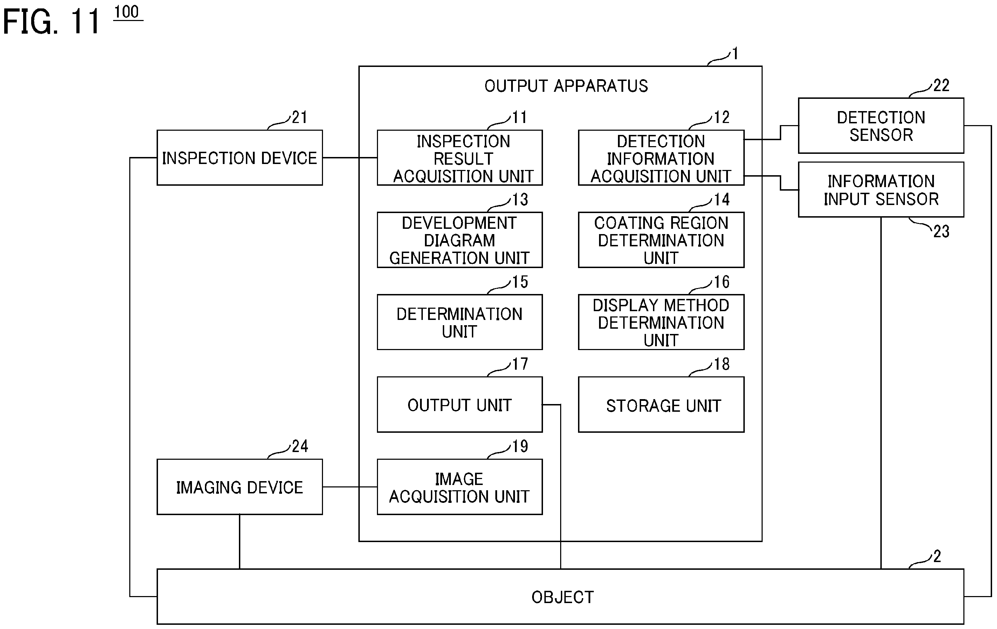

FIG. 11 is a diagram illustrating a configuration of an output system 100 according to a second embodiment of the present disclosure. The output system 100 includes an object 2, an inspection device 21, a detection sensor 22, an information input sensor 23, an imaging device 24, and an output apparatus 1. The output apparatus 1 includes an inspection result acquisition unit 11, a detection information acquisition unit 12, a development diagram generation unit 13, a coating region determination unit 14, a determination unit 15, a display method determination unit 16, an output unit 17, a storage unit 18, and an image acquisition unit 19. The same reference signs are assigned to the same components as those described above, and the description thereof will be omitted.

The output apparatus 1 according to the present embodiment includes the image acquisition unit 19 in addition to the configuration of the output apparatus 1 according to the first embodiment. The image acquisition unit 19 is connected to the imaging device 24 so as to communicate with the imaging device 24. The image acquisition unit 19 acquires image information relating to the movement of an operator that repairs a defect. The imaging device 24 images the movement of the operator that repairs the defect. The image information may be a video image, and the imaging device 24 is disposed so as to capture an image of the movement of the operator.

The display method determination unit 16 may determine a repaired defect that has been repaired based on the image information and may change the display method of the image data so as to emphasize the defect that is a following work position. The display method for emphasizing the defect display image may be, for example, a display method of changing the color of the image data or blinking the image data.

According to the output system 100 of the present embodiment, the defect repair portion can be displayed in accordance with the progress of the operation, and the portion at which the operation has not been finished can be clearly displayed.

Although the embodiments have been described above, the embodiments of the present disclosure are not limited to the configurations described above. The embodiments of the present disclosure may be modified without departing from the scope or spirit of the disclosure and may be determined appropriately in accordance with applications.

Aspects of the present disclosure are as follows, for example.

### First Aspect

An output apparatus includes a determination unit to determine a center point of a defect based on the defect on an object, and an output unit to output image data indicating a position of the defect based on the center point of the defect.

### Second Aspect

In the output apparatus according to the first aspect, the image data includes a mode that emphasizes the defect.

### Third Aspect

The output apparatus according to the first or second aspect further includes a detection information acquisition unit that acquires identification information on the object conveyed and detection information on detection of the object conveyed.

### Fourth Aspect

In the output apparatus according to the third aspect, the detection information acquisition unit acquires a moving amount of the object, and the output unit outputs the image data at the position of the defect based on the moving amount.

### Fifth Aspect

The output apparatus according to any one of the first to fourth aspects further includes an inspection result acquisition unit to acquire three-dimensional data representing a three-dimensional shape of the object, and a development diagram generation unit to generate a development diagram of the object based on the three-dimensional data of the object.

### Sixth Aspect

The output apparatus according to the fifth aspect further includes a coating region determination unit to determine a coating region of the object based on the three-dimensional data of the object and the development diagram of the object.

### Seventh Aspect

The output apparatus according to any one of the first to sixth aspects further includes a display method determination unit to determine a repair option of the defect and a display method of the image data based on the repair option.

### Eighth Aspect

In the output apparatus according to the seventh aspect, the display method determination unit changes the display method of the image data based on a takt time required for repairing the defect.

### Ninth Aspect

The output apparatus according to the seventh or eighth aspect further includes an image acquisition unit to acquire image information related to movement of an operator that repairs the defect. The display method determination unit determine the defect whose repair is finished based on the image information and changes the display method of the image data so as to emphasize the defect to be a following work position.

### Tenth Aspect

In the output apparatus according to any one of the seventh to ninth aspects, the display method determination unit determines a region in which the defect on the object is not inspected, as a visual inspection region, based on a result of inspection of the defect and a development diagram of the object.

### Eleventh Aspect

In the output apparatus according to any one of the first to tenth aspects, the object is an automobile body.

### Twelfth Aspect

An output system includes an inspection device to inspect a defect on an object, and an output apparatus. The output apparatus includes a determination unit to determine a center point of the defect based on the defect on the object, and an output unit to outputs the image data indicating a position of the defect based on the center point of the defect.

### Thirteenth Aspect

An output method for outputting image data at a position of a defect on an object includes determining a center point of the defect based on the defect on the object, and outputting the image data indicating the position of the defect based on the center point of the defect.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

The functionality of the elements disclosed herein may be implemented using circuitry or processing circuitry which includes general purpose processors, special purpose processors, integrated circuits, ASICs ("Application Specific Integrated Circuits"), FPGAs ("Field-Programmable Gate Arrays"), and/or combinations thereof which are configured or programmed, using one or more programs stored in one or more memories, to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein which is programmed or configured to carry out the recited functionality.

## Claims

1. An output apparatus (1) comprising:
circuitry (17) configured to:
acquire a defect on an object from an inspection device;
determine a center point (C) of the defect on the object (2); and
output image data to the center point of the defect on the object or to a portion adjacent to the center point (C) of the defect on the object

2. The output apparatus (1) according to claim 1,
wherein the circuitry (16) is further configured to emphasize the image data output to the defect on the object.

3. The output apparatus (1) according to claim 1,
wherein the circuitry (12) is further configured to:
acquire identification information of the object conveyed by a conveyor; and
acquire detection information, including a timing of detection of the object by a detector, from the detector.

4. The output apparatus (1) according to claim 3,
wherein the circuitry (11) is further configured to:
acquire, from the conveyor, a moving amount of the object (2) conveyed by the conveyor; and
output the image data to the defect on the object based on the moving amount of the object (2).

5. The output apparatus (1) according to claim 1,
wherein the circuitry (11, 13) is further configured to:
acquire three-dimensional data representing a three-dimensional shape of the object (2); and
generate a development diagram of the object based the three-dimensional data of the object (2).

6. The output apparatus (1) according to claim 5,
wherein the circuitry (14) is further configured to
determine a coating region of the object (2) based on the three-dimensional data and the development diagram of the object.

7. The output apparatus (1) according to claim 1, further comprising
a display to display the image data on the object, and
wherein the circuitry (16) is further configured to:
determine a repair option to repair the defect on the object; and
determine a display method to display the image data to the defect on the object by the display based on the repair option.

8. The output apparatus (1) according to claim 7,
wherein the circuitry (16) is further configured to change the display method to another display method based on a takt time to repair the defect.

9. The output apparatus (1) according to claim 7,
wherein the circuitry (19.,11) is further configured to:
acquire image information relating to a movement of an operator to repair a first defect;
specify the first defect that has been repaired based on the image information; and
change the display method to another display method emphasizing a second defect following the first defect based on a specification of the first defect.

10. The output apparatus (1) according to claim 7,
wherein the circuitry (11) is further configured to:
acquire three-dimensional data representing a three-dimensional shape of the object (2);
generate a development diagram of the object based the three-dimensional data of the object (2);
determine the defect on the object (2) as an inspected region; and
determine an uninspected region of the object (2) other than the inspected region as a visual inspection region based on the inspected region and the development diagram.

11. The output apparatus (1) according to claim 1,
wherein the circuitry is further configured to output image data to the defect on an automobile as the object.

12. An output apparatus system (100) comprising:
an inspection device (21) to inspect a defect on an object; and
an output apparatus (1) including circuitry,
wherein the circuitry is configured to:
determine a center point (C) of the defect on the object (2); and
output image data
to the center point of the defect on the object or
to a portion adjacent to the center point (C) of the defect on the object

13. An output method comprising:
determining (S102) a center point of a defect on an object; and
outputting (S104) image data at a position of the defect based on the center point of the defect.

14. The output apparatus (1) according to claim 1, further comprising
a display to display the image data on the object,
wherein the circuitry (17) is further configured to project the image data to the center point of the defect on the object or to the portion adjacent to the center point (C) of the defect on the object.
